# EUROPEAN PATENT APPLICATION

(11) **EP 1 903 005 A1**
(43) Date of publication of application: **26.03.2008**
(21) Application number: 06019822.3
(22) Date of filing: 22.09.2006
(51) Int. Cl.: C01B 33/033, C01B 33/037

(54) **Production of Si by reduction of SiCI4 with liquid Zn, and purification process**

(71) Applicant: Umicore, 1000 Brussels (BE)
(72) Inventor: Robert Eric, 2250 Olen (BE); Zijlema Tjakko, 2250 Olen (BE)
(74) Representative: Umicore RDI Patent Department

(57) **Abstract**

The invention relates to the manufacture of high purity silicon as a base material for the production of e.g. crystalline silicon solar cells.

SiCl₄ is converted to Si metal by contacting gaseous SiCl₄ with liquid Zn, thereby obtaining a Si-bearing alloy and Zn-chloride, which is separated. The Si-bearing alloy is then purified by heating it at a temperature above the melting point of Si and by injecting Cl₂ and/or a gaseous Si chloride into the melt.

This process does not require complicated technologies and preserves the high purity of the SiCl₄ towards the end product. The only other reactant is Zn, which can be obtained in very high purity grades, and which can be recycled after electrolysis of the Zn-chloride.

## Description

The invention relates to the manufacture of solar grade silicon as a feedstock material for the manufacture of crystalline silicon solar cells. The Si metal is obtained by direct reduction of SiCl₄, a precursor that is commonly available in high purity grades.

Silicon suitable for application in solar cells is commonly manufactured by the thermal decomposition of SiHCl₃ according to the Siemens process or its variants. The process delivers very pure silicon, but it is slow, highly energy consuming, and requires large investments.

An alternative route towards the formation of Si for solar cells is the reduction of SiCl₄ with metals such as Zn. This process has the potential for significant cost reduction because of lower investment costs and reduced energy consumption.

The direct reduction of SiCl₄ by Zn in the vapour phase is described in US 2,773,745, US 2,804,377, US 2,909,411 or US 3,041,145. When Zn vapour is used, a granular silicon product is formed in a fluidised bed type of reactor, enabling easier Si separation. However, an industrial process based on this principle is technologically complex.

The direct reduction of SiCl₄ with liquid Zn is described in JP 11-092130 and JP 11-011925. Si is formed as a fine powder and separated from the liquid Zn by entraining it with the gaseous ZnCl₂ by-product. This process is however not practical because the selection of operating conditions leading to the entrainment of a major part of the Si with the gaseous flux appears to be critical. Also, the subsequent separation of the fine Si powder from the ZnCl₂ is problematic as well as the handling and melting of the fine Si powder. The ZnCl₂ has moreover to be vaporized twice, leading to a poor global energetic efficiency of the process.

It is an object of the present invention to provide a solution for the problems in the prior art.

To this end, according to this invention, high purity Si metal is obtained by a process for converting SiCl₄ into Si metal, comprising the steps of:
- contacting gaseous SiCl₄ with a liquid metal phase containing Zn, thereby obtaining a Si-bearing metal phase and Zn-chloride;
- separating the Zn-chloride from the Si-bearing metal phase; and
- purifying the Si-bearing metal phase by heating to a temperature above the melting point of Si and injecting Cl₂ and/or a gaseous Si chloride compound into said metal phase, thereby vaporising Zn, eliminating impurities and obtaining Si metal. The Si chloride is preferably SiCl₄, i.e. the same compound as used in the contacting step.

The contacting and the separating steps are performed in a single reactor. This is rendered possible by the fact that a major part (more than 50% by weight) of the formed Si is retained in the liquid metal phase.

It is useful to combine the contacting and the separating steps, by operating the contacting step at a temperature above the boiling point of Zn-chloride, which evaporates. The Zn-chloride can be permitted to escape so as to be collected for further processing.

The Si-bearing metal phase as obtained in the contacting step can advantageously contain, besides Si as solute, also at least some Si in the solid state, e.g. as suspended particles. Formation of particular S may indeed occur during the contacting step, when the Zn metal gets saturated in Si. Solid state Si can also be obtained by cooling the Si-bearing metal phase as obtained in the contacting step, preferably to a temperature of between 420 and 600 °C. The solid state Si can preferably be separated from the bulk of the molten phase, e.g. after settling. This Si metal phase is however still impregnated with Zn and has to be further processed in the purification step.

It is advantageous to perform the contacting step by injecting SiCl₄ into a bath comprising molten Zn at a flow rate adapted to limit the loss of Si by entrainment with evaporating Zn-chloride, to less than 15% (weight). To this end, a flow rate of SiCl₄ below 0.8 kg/min per m² of bath surface is suitable. Much higher rates, up to 10 kg/min per m² of bath surface but preferably limited to 2 kg/min per m², are however compatible with the abovementioned low Si losses, if the gaseous SiCl₄ is dispersed in the bath. Adequate dispersion can be obtained using e.g. multiple submerged nozzles, a submerged nozzle equipped with a porous plug, a rotating dispersion device, or any combination of these means. The SiCl₄ can be injected along with a carrier gas such as N₂.

It is useful to add a vacuum evaporation step after the purification step. The purification can advantageously be performed in again the same reactor as the first two process steps.

It is also advantageous to recycle one or more of the different streams which are not considered as end-products:
- the obtained Zn-chloride can be subjected to molten salt electrolysis, thereby recovering Zn, which can be recycled to the SiCl₄ reduction step, and chlorine, which can be recycled to a Si chlorination process for the production of SiCl₄;
- Zn that is vaporised in the purification step can be condensed and recycled to the SiCl₄ contacting step; and/or- the fraction of SiCl₄ that exits the contacting and the purification steps un-reacted can be recycled to the SiCl₄ contacting step, e.g. after condensation.

According to this invention, SiCl₄ is reduced with liquid Zn. The technology for this process is therefore much more straightforward than that required for the gaseous reduction process. A Si-bearing alloy containing both dissolved and solid Si can be obtained, while the chlorinated Zn either forms a separate liquid phase, containing most of the solid Si, or is formed as a vapour. Zn can be retrieved from its chloride, e.g. by molten salt electrolysis, and reused for SiCl₄ reduction. The Si-bearing alloy is purified at high temperatures, above the melting point of Si, which is well above the boiling points of both Zn and Zn-chloride. The evaporated Zn can be retrieved and reused for SiCl₄ reduction. Any other volatile element is also removed in this step- It is thus possible to close the loop on Zn, thereby avoiding the introduction of impurities into the system through fresh additions.

In a preferred embodiment according to the invention, gaseous SiCl₄ is contacted with liquid Zn at atmospheric pressure, at a temperature above the boiling point of ZnCl₂ (732 °C) and below the boiling point of Zn (907 °C). The preferred operating temperature is 750 to 880 °C, a range ensuring sufficiently high reaction kinetics, while the evaporation of metallic Zn remains limited.

In a typical embodiment, the molten Zn is placed in a reactor, preferably made of quartz or of another high purity material such as graphite. The SiCl₄, which is liquid at room temperature, is injected in the zinc via a submerged tube. The injection is performed at the bottom of the Zn-containing vessel. The SiCl₄, which is heated in the tube, is actually injected as a gas. The end of the injection tube is provided with a dispersion device such as a porous plug or fritted glass. It is indeed important to have a good contact between the SiCl₄ and the Zn to get a high reduction yield. If this is not the case, partial reduction to SiCl₂ could occur, or SiCl₄ could leave the zinc un-reacted. With an adequate SiCl₄ - Zn contact, close to 100% conversion is observed. Finely dispersing the SiCl₄ has been demonstrated to be a major factor in limiting the entrainment of finely dispersed Si with the gaseous flow.

The reduction process produces ZnCl₂. It has a boiling point of 732 °C, and is gaseous at the preferred operating temperature. It leaves the Zn-containing vessel via the top. The vapours arc condensed and collected in a separate crucible.

The process also produces reduced Si. The Si dissolves in the molten Zn up to its solubility limit. The Si solubility in the Zn increases with temperature and is limited to about 4% at 907 °C, the atmospheric boiling point of pure Zn.

In a first advantageous embodiment of the invention, the amount of SiCl₄ injected is such that the solubility limit of Si in Zn is exceeded. Solid, particulate Si is produced, which may remain in suspension in the molten Zn bath and/or aggregate so as to form dross. This results in a Zn metal phase with a total (dissolved, suspended and drossed) mean Si concentration of preferably more than 10%, i.e. considerably higher than the solubility limit, and thus in a more efficient and economic Si purification step. Any particulate Si is however subject to losses by entrainment with the ZnCl₂ gaseous stream. This risk can be minimised by using a Sufficiently low SiCl₄ flow rate and/or means ensuring the dispersion of the SiCl₄ into the Zn melt. A Si loss by entrainment of less than 15% of the total Si input to the process is considered as acceptable.

In a second advantageous embodiment according to the invention, the Si-bearing alloy is allowed to cool down to a temperature somewhat above the melting point of the Zn, e.g. 600 °C. A major part of the initially dissolved Si crystallizes upon cooling, and accumulates together with any solid Si that was already present in the bath, in an upper solid fraction. The lower liquid fraction of the metal phase is Si-depleted, and can be separated by any suitable means, e.g. by pouring. This metal can be directly re-used for further SiCl₄ reduction. The upper Si-rich fraction is then subjected to the purification as mentioned above, with the advantage that the amount of Zn to be evaporated is considerably reduced.

Both of the above first and second advantageous embodiments can of course be combined.

When the purification step is performed above the melting point of Si, the molten silicon can be solidified in a single step, chosen from the methods of crystal pulling such as the Czochralski method, directional solidification and ribbon growth. The ribbon growth method includes its variants, such as ribbon-gowth-on-substrate (RGS), which directly yields RGS Si wafers.

Alternatively, the molten silicon can be granulated, the granules being fed to a melting furnace, preferably in a continuous way, whereupon the molten silicon can be solidified in a single step, chosen from the methods of crystal pulling, directional solidification and ribbon growth.

The solid material obtained can then be further processed to solar cells, directly or after wafering, according to the solidification method used.

The Zn, together with typical trace impurities such as Tl, Cd and Pb, can be separated from the Si-bearing alloy by vaporisation at a temperature above the boiling point of Zn (907 °C) Si with a purity of 5N to 6N is then obtained. A special high temperature sparging or bubbling step with Cl₂ and/or a gaseous Si chloride typically leads to Si with even superior purity. For this operation, the temperature is further increased above the melting point (1414 °C) but below the boiling point (2355 °C) of Si. Some of the elements that can be eliminated efficiently by this process step are Cr, Cu, Mn, Al, Ca, B and P.

A further advantage of the invention is that the Si can be recovered in the molten state at the end of the purification process. Indeed, in the state-of the art Siemens process and its variants, the Si is produced as a solid that has to be re-melted to be fashioned into wafers by any of the commonly used technologies (crystal pulling or directional solidification). Directly obtaining the Si in the molten state allows for a better integration of the feedstock production with the steps towards wafer production, providing an additional reduction in the total energy consumption of the process as well as in the cost of the wafer manufacturing. The liquid Si can indeed be fed directly to an ingot caster or a crystal puller. Processing the Si in a ribbon growth apparatus is also possible.

If one does not wish to produce ready-to-wafer material, but, only intermediate solid feedstock, it appears advantageous to granulate the purified Si. The obtained granules are easier to handle and to dose than the chunks obtained in e.g. the Siemens-based processes. This is particularly important in the case of ribbon growth technologies. The production of free flowing granules enables the continuous feeding of a CZ furnace or a ribbon growth apparatus.

### Example

The following example illustrates the invention. 8500 g of metallic Zn is heated to 850 °C in a graphite reactor. The height of the bath is about 19 cm and its diameter is 9 cm. A Minipuls^{™} peristaltic pump is used to introduce SiCl₄ in the reactor via a quartz tube. The immersed extremity of the tube is fitted with a porous plug made of quartz. The SiCl₄, which has a boiling point of 58 °C, vaporises in the immersed section of the tube and is dispersed as a gas in the liquid Zn. The SiCl₄ flow rate is ca. 250 g/h, and the total amount added is 5200 g. The flow rate corresponds to 0.66 kg/min per m² of bath surface. The ZnCl₂, which evaporates during the reaction, is condensed in a graphite tube connected to the reactor and is collected in a separate vessel. Any un-reacted SiCl₄ is collected in a wet scrubber connected to the ZnCl₂ vessel. A Zn-Si alloy, saturated in Si at the prevalent reactor temperature and containing additional sol id particles of Si, is obtained. About 5.3 kg of Zn-Si alloy is obtained. The total Si content of this alloy is 14.6%. The Si reaction yield is thus about 91 %. The Si losses can be attributed to the entrainment of particles of Si with the escaping ZnCl₂ vapours, and to the incomplete reduction of SiCl₄ into Si metal. Of the remaining Si, 62 g is found in the ZnCl₂ and about 10 g in the scrubber.
The Zn-Si alloy is separated in two fractions of about equal weight. Each fraction is heated to 1550 °C for 1 h in a quartz crucible, in order to evaporate the Zn and melt the Si. A quartz tube is dipped into the molten bath corresponding to a first alloy fraction, and SiCl₄ is bubbled at a flow rate of 200 g/h. The second alloy fraction is not sparged. Both fractions are allowed to cool down to room temperature, under inert atmosphere. Two samples are taken from each fraction, and analysed by Gas Discharge Mass Spectrometry (GDMS). The average impurity levels are reported in the Table below. The concentration of most impurities is significantly reduced by the SiCl₄ sparging step.

**Table: Impurities in Si after thermal treatment with and without SiCl4 bubbling**

| Element | With SiCl₄ bubbling (ppm) | Without SiCl₄ bubbling (ppm) |
|---|---|---|
| B | <0.005 | <0.005 |
| A1 | 0.1 | 0.4 |
| P | 0.03 | 0.05 |
| Cr | 0.12 | 0.2 |
| Cu | 0.25 | 0.40 |
| Mn | 0.08 | 0.23 |
| Ca | 0.34 | 0.62 |
| Fe | 0.26 | 0.24 |
| Zn | < 0.05 | <0.05 |
| Ti | 0.21 | 0.2 |
| Ni | < 0.01 | < 0.01 |

## Claims

1. Process for converting SiCl₄ into Si metal, comprising the steps of:
- contacting gaseous SiCl₄ with a liquid metal phase containing Zn, thereby obtaining a Si-bcaring metal phase and Zn-chloride;
- separating the Zn-chloride from the Si-bearing metal phase; and
- purifying the Si-bearing metal phase by heating to a temperature above the melting point of Si and injecting Cl₂ and/or a gaseous Si chloride compound into said metal phase, thereby vaporising Zn, eliminating impurities and obtaining Si metal, whereby the contacting and the separation steps are performed in a single reactor.

2. Process according to claim 1, whereby the gaseous Si chloride compound that is used in the purification step is SiCl₄.

3. Process according to claim 1 or 2, wherein the contacting and the separating steps are performed simultaneously, by operating them at a temperature above the boiling point of Zn-chloride, which evaporates.

4. Process according to any of claims 1 to 3, wherein the Si-bearing metal phase that is obtained in the contacting step, contains at least part of the Si in the solid state.

5. Process according to any of claims 1 to 4, wherein a cooling step of the Si-bearing metal phase, preferably to a temperature of between 420 and 600 °C, is inserted before the purification step, thereby converting at least part of the Si present as a solute in the Si-bearing metal phase that is obtained in the contacting step, to the solid state.

6. Process according to claims 4 or 5, whereby the Si present in the solid state is separated, forming the Si-bearing metal phase that is further processed in the purification step.

7. Process according to claims 1 to 6, wherein the contacting step is performed by injecting SiCl₄ into a bath comprising molten Zn, at a flow rate adapted to limit the loss of Si by entrainment with evaporating Zn-chloride to less than 15%.

8. Process according to claim 7, whereby the flow rate of SiCl₄ is lower than 0.8 kg/min per m² of bath surface.

9. Process according to any one of claims 1 to 8, whereby the purification step is followed by a vacuum evaporation step.

10. Process according to any one of claims 1 to 9, further comprising the steps of:
- subjecting the separated Zn-chloride to molten salt electrolysis, thereby recovering Zn and chlorine;
- recycling the Zn to the SiCl₄ contacting step; and
- recycling the chlorine to a Si chlorination process for the production of SiCl₄.

11. Process according to any one of claims 1 to 10, wherein the Zn that is vaporised in the purification step, is condensed and recycled to the SiCl₄ contacting step.

12. Process according to any one of claims 2 to 11, wherein the fraction of SiCl₄ that exits the contacting and the purification steps un-reacted, is recycled to the SiCl₄ contacting step.

13. Process according to any one of claims 1 to 12, further comprising a single solidification step of the purified liquid Si, using a method chosen from the group of crystal pulling, directional solidification, and ribbon growth.

14. Process according to any one of claims 1 to 12, comprising the granulation of the purified liquid Si.

15. Process according to claim 14, comprising the steps of:
- feeding the granules to a melting furnace; and
- applying a single solidification step, using a method chosen from the group of crystal pulling, directional solidification, and ribbon growth.

16. Process according to claims 13 or 15, whereby the solid material is wafered and further processed to solar cells.

## Amended claims

### Amended claims in accordance with Rule 137(2) EPC.

**1.** Process for converting SiCl₄ into Si metal, comprising the steps of:
- contacting gaseous SiCl₄ through an injection tube with a liquid metal phase containing Zn, whereby the end of the injection tube is provided with a dispersion device, and thereby obtaining a Si-bearing metal phase and Zn-chloride;
- separating the Zn-chloride from the Si-bearing metal phase; and
- purifying the Si-bearing metal phase by heating to a temperature above the melting point of Si and injecting Cl₂ and/or a gaseous Si chloride compound into said metal phase, thereby vaporising Zn, eliminating impurities and obtaining Si metal, whereby the contacting and the separation steps are performed in a single reactor.

**2.** Process according to claim 1, whereby the gaseous Si chloride compound that is used in the purification step is SiCl₄.

**3.** Process according to claim 1 or 2, wherein the contacting and the separating steps are performed simultaneously, by operating them at a temperature above the boiling point of Zn-chloride, which evaporates.

**4.** Process according to any of claims 1 to 3, wherein the Si-bearing metal phase that is obtained in the contacting step, contains at least part of the Si in the solid state.

**5.** Process according to any of claims 1 to 4, wherein a cooling step of the Si-bearing metal phase, preferably to a temperature of between 420 and 600 °C, is inserted before the purification step, thereby converting at least part of the Si present as a solute in the Si-bearing metal phase that is obtained in the contacting step, to the solid state.

**6.** Process according to claims 4 or 5, whereby the Si present in the solid state is separated, forming the Si-bearing metal phase that is further processed in the purification step.

**7.** Process according to claims 1 to 6, wherein the contacting step is performed by injecting SiCl₄ into a bath comprising molten Zn, at a flow rate greater than 10 and up to 50 kg/min per m² of bath surface.

**8.** Process according to any one of claims 1 to 7, whereby the purification step is followed by a vacuum evaporation step.

**9.** Process according to any one of claims 1 to 8, further comprising the steps of:
- subjecting the separated Zn-chloride to molten salt electrolysis, thereby recovering Zn and chlorine;
- recycling the Zn to the SiCl₄ contacting step; and
- recycling the chlorine to a Si chlorination process for the production of SiCl₄.

**10.** Process according to any one of claims 1 to 9, wherein the Zn that is vaporised in the purification step, is condensed and recycled to the SiCl₄ contacting step.

**11.** Process according to any one of claims 2 to 10, wherein the fraction of SiCl₄ that exits the contacting and the purification steps un-reacted, is recycled to the SiC1₄ contacting step.

**12.** Process according to any one of claims 1 to 11, further comprising a single solidification step of the purified liquid Si, using a method chosen from the group of crystal pulling, directional solidification, and ribbon growth.

**13.** Process according to any one of claims 1 to 11, comprising the granulation of the purified liquid Si.

**14.** Process according to claim 13, comprising the steps of:
- feeding the granules to a melting furnace; and
- applying a single solidification step, using a method chosen from the group of crystal pulling, directional solidification, and ribbon growth.

**15.** Process according to claims 12 or 14, whereby the solid material is wafered and further processed to solar cells.
